(19) Europäisches Patentamt
European Patent Office
Office européen des brevets

(11) Numéro de publication: **0 039 299**
**B1**

(12) **FASCICULE DE BREVET EUROPEEN**

(45) Date de publication du fascicule du brevet: **21.11.84**

(51) Int. Cl.³: **C 08 G 77/08**, C 08 G 77/10

(21) Numéro de dépôt: **81420050.7**

(22) Date de dépôt: **02.04.81**

(54) **Procédé d'obtention de polysiloxanes de masses moléculaires élevées par polymérisation et réarrangement de polysiloxanes en présence de catalyseur alcalin et de tris (oxaalkyl)amine.**

(30) Priorité: **29.04.80 FR 8010118**

(43) Date de publication de la demande:
**04.11.81 Bulletin 81/44**

(45) Mention de la délivrance du brevet:
**21.11.84 Bulletin 84/47**

(84) Etats contractants désignés:
**BE DE GB IT LU NL**

(56) Documents cités:
**DE - A - 2 737 698**
**FR - A - 1 434 629**
**FR - A - 2 295 058**
**FR - A - 2 310 372**
**FR - A - 2 352 834**
**FR - A - 2 398 079**

(73) Titulaire: **RHONE-POULENC SPECIALITES CHIMIQUES, "Les Miroirs" 18, Avenue d'Alsace, F-92400 Courbevoie (FR)**

(72) Inventeur: **Millet, Claude, 78, rue du Puits Vieux, F-69800-Saint-Priest (FR)**
Inventeur: **Soula, Gérard, 33, rue Nungesser, F-69330 - Meyzieu (FR)**

(74) Mandataire: **Chichery, Guy et al, RHONE-POULENC RECHERCHES Service Brevets Chimie et Polymères Centre de Recherches de Saint-Fons B.P. 62, F-69192 St-Fons Cédex (FR)**

**EP 0 039 299 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de préparation d'organopolysiloxanes de masse moléculaire élevée par polymérisation et réarrangement d'organopolysiloxanes de faible masse moléculaire, en présence de catalyseur alcalin et d'accélérateur.

On connaît déjà selon la demande de brevet francais 76/17 170 (N° de publication 2 353 589) un procédé de préparation d'organopolysiloxanes de masse moléculaire élevée par polymérisation et réarrangement de cyclosiloxanes éventuellement en présence de polysiloxanes linéaires de masse moléculaire peu élevée. Ce procédé est caractérisé en ce que la réaction de polymérisation est effectuée sans solvant et en présence d'un système catalytique constitué par un métal alcalin (ou l'un des dérivés du dit métal) et par un composé mono ou polymacrohétérocyclique oxygéné et/ou azoté (cryptand, éther couronne), jouant le rôle d'accélérateur. Ce procédé permet d'obtenir à l'aide de quantintés très faibles du système catalytique, et avec une cinétique rapide un polysiloxane de masse moléculaire très élevée.

Dans la demande de brevet français n° 76.13 333 (n° de publication 2 310 372), on décrit un procédé du même type mais où l'accélérateur est un éther couronne et où le catalyseur est KOH ou un silanolate de KOH complexé avec une quantité équimolaire dudit accélérateur.

Dans la demande de brevet allemand 27 37 698, on décrit un procédé du même type mais où l'activateur utilisé est polyéther linéaire mono ou dihydroxylé.

Dans la demande de brevet français 77 15 717 (n° de publication 2 352.834), on décrit de façon générale un procédé de polymérisation anionique dans un solvant, applicable à la polymérisation ou au réarrangement d'organopolysiloxanes dans un solvent, selon lequel on utilise comme initiateur de polymérisation une association au sein d'un solvant, d'un amidure alcalin et d'au moins un composé hydroxylé qui peut être notamment un alcool primaire, secondaire ou tertiaire alyphatique ou aromatique, un éther alcool, un aminoalcool, un polyéther, une diolamine.

Les procédés ci-dessus présentent au moins l'un des inconvenients ci-dessous:

— on utilise des composés macrohétérocycliques qui ont une structure extrèmement sophistiquée et qui de ce fait présentent les inconvénients d'exiger des procédés de synthèse complexes et d'avoir en conséquence des prix de revient extrèmement élevés.
— l'activateur diot être utilisé en quantité telle qu'il complexe la totalité du catalyseur.
— la réaction de polymérisation s'effectue nécessairement en milieu solvant.
— l'association catalyseur/activateur doit être réalisée dans un solvant, préalablement à la polymérisation.

Il apparaissait donc intéressant de disposer sur le plan industriel d'un procédé de préparation de polysiloxanes de masse moléculaire élevée par polymérisation d'organopolysiloxanes de masse moléculaire peu élevée, à l'aide d'un système catalytique efficace et d'accès plus facile sur le plan industriel. La présente invention répond précisément à ce but en préconisant l'utilisation en tant qu'accélérateurs de tris(oxaalkyl)amine.

La présente invention est alors constituée par un procédé de préparation d'organopolysiloxanes de masse moléculaire élevée par polymérisation et réarrangement d'organopolysiloxanes de masse moléculaire plus faible en présence de catalyseur, le procédé étant caractérisé en ce qu'il est effectué en présence d'un catalyseur alcalin et de tris(oxaalkyl)amine de formule (I):

$$N\!\left[CHR_1-CHR_2-O-(CHR_3-CHR_4-O)_n-R_5\right]_3$$

les divers symboles ayant la signification suivante:

— n un nombre entier inférieur ou égal à 10 et éventuellement nul.
— $R_1$, $R_2$, $R_3$, $R_4$: des radicaux identiques ou différents rerésentant un atome d'hydrogène ou un radical alkyle ayant de 1 à 4 atomes de carbone.
— $R_5$: un atome d'hydrogène, un radical alkyle ou cycloalkyle, ayant de 1 à 12 atomes de carbone, un radical phényle, alkylphényle ($C_mH_{2m+1}-O-$), phénylalkyle ($O-C_mH_{2m}-$) m étant un nombre entier au plus égal à 12.

Selon une variante préférentielle la procédé est réalisé en présence de tris(oxaalkyl)amine de formule (I) dans laquelle les radicaux $R_1$, $R_2$, $R_3$ et $R_4$ représentent un atome d'hydrogène ou un radical méthyle, $R_5$ et n ayant la signification précédente.

Pour la mise en œuvre du procédé, on préfère encore plus particulièrement utiliser les tris(oxaalkyl)amines de formule I dans laquelle n est un nombre entier égal ou inférieur à 3 et éventuellement nul et où $R_5$ représente un atome d'hydrogène ou un radical alkyle ayant de 1 à 4 atomes de carbone.

A titre illustratif on peut citer parmi les tris(oxaalkyl)amines à groupement hydroxyalkyl les composés suivants:

— la triethanol amine
— la tris (oxa-3 hydroxy-5 pentyl) amine

$$N(CH_2-CH_2-O-CH_2-CH_2-OH)_3$$

— la tris (dioxa-3,6, hydroxy-8 octyl) amine

$$N(CH_2-CH_2-O-CH_2-CH_2-OCH_2-OH)_3$$

— la tris (diméthyl-2,4, oxa-3, hydroxy-5, pentyl) amine

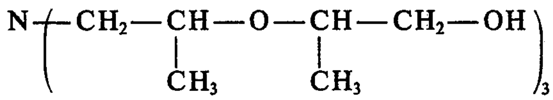

Parmi les tris(oxaalkyl)amines sans groupement hydroxyalkyle, on peut citer les composés suivants:

— la tris(oxa-3 heptyl)amine de formule:

$$N-(CH_2-CH_2-O-C_4H_9)_3$$

— la tris(dioxa-3,6 heptyl)amine de formule:

$$N-(CH_2-CH_2-O-CH_2-CH_2-O-CH_3)_3$$

— la tris(trioxa-3,6,9 décyl)amine de formule:

$$N-(CH_2-CH_2-O-CH_2-CH_2-O-CH_2-CH_2-O-CH_3)_3$$

— la tris(dioxa-3,6 octyl)amine de formule:

$$N-(CH_2-CH_2-O-CH_2-CH_2-O-C_2H_5)_3$$

— la tris(trioxa-3,6,9 undécyl)amine de formule:

$$N-(CH_2-CH_2-O-CH_2-CH_2-O-CH_2-CH_2-O-C_2H_5)_3$$

— la tris(dioxa-3,6 nonyl)amine de formule:

$$N-(CH_2-CH_2-O-CH_2-CH_2-O-C_3H_7)_3$$

— la tris(trioxa-3,6,9 dodécyl)amine de formule:

$$N-(CH_2-CH_2-O-CH_2-CH_2-O-CH_2-CH_2-O-C_3H_7)_3$$

— la tris(dioxa-3,6 décyl)amine de formule:

$$N-(CH_2-CH_2-O-CH_2-CH_2-O-C_4H_9)_3$$

— la tris(trioxa-3,6,9 tridécyl)amine de formule:

$$N-(CH_2-CH_2-O-CH_2-CH_2-O-CH_2-CH_2-O-C_4H_9)_3$$

On peut encore citer:

— la tris(dioxa-3,6 méthyl-4 heptyl)amine de formule:

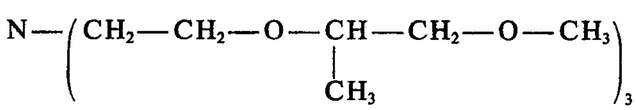

— la tris(dioxa-3,6 diméthyl-2,4 heptyl)amine de formule:

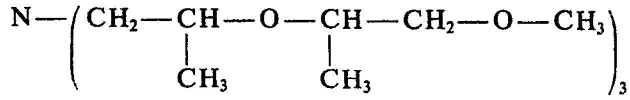

Les tris(oxaalkyl)amines à groupements hydroxyalkyle utilisables sont des composés bien connus dans la littérature et qui sont en général obtenus en deux étapes, la première consistant à faire réagir un métal alcalin sur un alcoylèneglycol, puis à faire réagir dans une deuxième étape, le composé résultant de la lère étape sur une tris(halogénoalkyl)amine.

Les tris(oxaalkyl)amines ne possédant pas de groupement hydroxyalkyle sont des composés également bien décrits dans la littérature comme par example dans le brevet français 1 302 365. Ces amines peuvent être obtenues comme sous-produits de la synthèse des amines primaires et secondaires correspondantes. On peut également les obtenir en deux étapes, en faisant réagir d'abord un métal alcalin avec un monoéther d'alcoylèneglycol, puis en condensant dans une deuxième étape le composé obtenu à la lère étape avec une tris(halogénoalkyl)amine.

On peut, dans le cadre de la présente invention polymériser et réarranger des composés siloxaniques constitués par des cyclosiloxanes et/ou des organopolysiloxanes acycliques de masses moléculaires peu élevées.

Les cyclosiloxanes polymérisables ont pour formule (II):

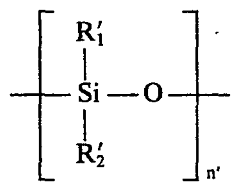

(II)

dans laquelle les divers symboles représentent:

- n': un nombre entier supérieur ou égal à 3.
- $R'_1$: un atome d'hydrogène, un radical alkyle, alkényle, halogénoalkyle, halogénoalkényle, ces divers radicaux ayant de 1 à 5 atomes de carbone et comportant la cas échéant de 1 à 6 atomes de chlore et/ou de fluor; un radical cycloalkyle, cycloalkényle ces radicaux ayant de 3 à 8 atomes de carbone et étant éventuellement substitués par 1 à 4 atomes de chlore et/ou de fluor; un radical cyanoalkyle ayant de 3 à 4 atomes de carbone; un radical phényle, alkylphényle ou phénylalkyle ayant de 6 à 8 atomes de carbone, ces radicaux étant éventuellement substitués par 1 à 4 atomes de chlore et/ou de fluor.
- $R'_2$: un radical tel que $R'_1$ ou encore un groupement alkoxy $-OR'_3$, $R'_3$ ayant la même signification que $R'_1$.

A titre illustratif, on peut citer parmi les radicaux $R'_1$ les radicaux suivants:

- un atome d'hydrogène
- les groupes: méthyle; éthyle; propyle; isopropyle; butyle; isobutyle; $\alpha$-pentyle; t-butyle; chlorométhyle; dichlorométhyle; $\alpha$-chloroéthyle; $\alpha$, $\beta$-dichloroéthyle; fluorométhyle; difluorométhyle; $\alpha$, $\beta$-difluoroéthyle; trifluoro-3,3-3 propyle; trifluoro cyclopropyle; trifluoro-4,4,4 butyle; heptafluoro-3,3,3,4,4,5,5 pentyle; $\beta$-cyanoéthyle; $\gamma$-cyanopropyle; phényle; p-chlorophényle; m-chlorophényle; dichloro-3,5 phényle; trichlorophényle; tétrachlorophényle; o-, p-, ou m-tolyle; $\alpha$, $\alpha$, $\alpha$-trifluorotolyle; xylyles comme diméthyl-2,3 phényle; diméthyl-3,4 phényle.

Préférentiellement n' est égal à 3 ou 4 et $R'_1$ représente un atome d'hydrogène, un radical méthyle, ou vinyle, ces radicaux étant éventuellement substitués par un ou deux atomes de chlore et/ou de fluor; un radical phényle tolyle, xylyle éventuellement substituée par un ou deux atomes de chlore et/ou de fluor,

$R'_2$ représente préférentiellement outre les significations préférentielles du radical $R'_1$ des radicaux hydroxy, méthoxy.

Tout particulièrement, on polymérise dans le cadre de la présente invention les cyclosiloxanes constitués par l'hexaméthylcyclotrisiloxane ($D_3$) et/ou de l'octaméthylcyclotétrasiloxane ($D_4$).

A titre illustratif, on peut citer parmi les cyclosiloxanes utilisables dans le cadre de la présente invention:

- l'hexaméthylcyclotrisiloxane ($D_3$)
- l'octaméthylcyclotétrasiloxane ($D_4$)
- l'octaphénylcyclotétrasiloxane
- le tétraméthylcyclotétrasiloxane
- le tétraméthyltétravinylcyclotétrasiloxane

Dans le cadre de la présente invention, on peut également polymériser et réarranger des composés siloxaniques constitués par des cyclosiloxanes de formule (II) associés à des organopolysiloxanes acycliques, de masse moléculaire peu élevée et de nature linéaire, ramifiée ou réticulée.

Ces organopolysiloxanes ayant en général au plus 200 atomes de silicium par mole, dont la nature n'est pas critique sont constitués de motifs de formule générale III:

$$(R'_1)_x SiO_{\frac{4-x}{2}} \qquad \text{(III)}$$

éventuellement associés à des motifs de formule:

$$(R'_1)_y (R'_2)_z SiO_{\frac{4-y-z}{2}} \qquad \text{(IV)}$$

les divers symboles ayant la signification suivante:

- $R'_1$: un atome d'hydrogène, un radical alkyle, alkényle, halogénoalkyle, halogénoalkényle, ces divers radicaux ayant de 1 à 5 atomes de carbone et comportant la cas échéant de 1 à 6 atomes de chlore et/ou de fluor; un radical cycloalkyle, cycloalkényle ces radicaux ayant de 3 à 8 atomes de carbone et étant éventuellement substitués par 1 à 4 atomes de chlore et/ou de fluor; un radical cyanoalkyle ayant de 3 à 4 atomes de carbone; un radical phényle, alkylphényle ou phénylalkyle ayant de 6 à 8 atomes de carbone, ces radicaux étant éventuellement substitués par 1 à 4 atomes de chlore et/ou de fluor.
- $R'_2$: un radical tel que $R'_1$ ou encore un groupement alkoxy $-OR'_3$, $R'_3$ ayant la même signification que $R'_1$.
- x, et y: nombres entiers égaux à 0, 1, 2 ou 3.
- z: nombre entier égal ou inférieur à 2.

Préférentiellement, les composés siloxaniques à polymériser et constitués par un mélange de cyclosiloxanes et d'organopolysiloxanes acycliques comprennent en poids au moins 50% de cyclosiloxanes. Dans un tel contexte on polymérise aventageusement les mélanges contenant au moins 50% de $D_3$ et/ou de $D_4$, le complément étant constitué par un organopolysiloxane linéaire »$M_2D_p$« et ayant pour formule V:

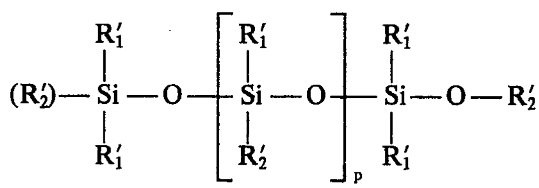

(V)

les divers symboles ayant la signification suivante:

- p: nombre entier allant de 1 à 100
- $R'_1$ et $R'_2$: même signification que celles indiquées dans le cadre des cyclosiloxanes.

Parmi les organosiloxanes de faible masse moléculaire et de structure linéaire, on peut citer:

- l'hexaméthyldisiloxane
- le tétraméthyldivinyldisiloxane
- les polydiméthylpolysiloxanes $\alpha$, $\omega$ dihydroxylés.
- les polydiméthylpolysiloxanes $\alpha$, $\omega$ bis hydroxydiméthylsilylé
- les polydiméthylpolysiloxanes $\alpha$, $\omega$ diméthoxylés
- le tétraphényldisiloxane diol
- les $\alpha$, $\omega$ dihydrogéno-polydiméthylpolysiloxanes

Enfin, on peut dans le cadre de la présente invention polymériser et réarranger les organopolysiloxanes acycliques, linéaires ou ramifiés tels que précédemment définis.

Il doit être également entendu que l'on ne sortirait pas du cadre de l'invention en associant aux organosiloxanes à polymériser et à réarranger et tels que précédemment définis une faible quantité représentant jusqu'à 20% en poids par exemple d'un silane porteur d'un ou plusieurs groupements alcoxy tels que par exemple le méthyltriéthoxysilane, le vinyl-tris(méthoxyéthoxy)silane, le phényltriethoxysilane.

Dans le système catalytique la partie catalyseur alcalin est constitué par un métal alcalin ou alcalino-terreux ou par un tout autre dérivé connu de ces métaux tels que par exemple préconisés pour la polymérisation des polysiloxanes de faible masse moléculaire (voir par exemple l'ouvrage de NOLL; référence citée p. 227). On peut notamment utiliser les hydroxydes, les amidures, les alcoolates, les

siliconates, les silanolates ... On utilise préférentiellement les dérivés du lithium, du sodium, du potassium, du rubidium et du caesium ainsi que leurs dérivés correspondants. Tout particulièrement on utilise le lithium, le potassium, le sodium et leurs dérivés.

Le système destiné à catalyser la réaction de polycondensation selon l'invention, peut être utilisé en proportions très variées. Il se révèle particulièrement remarquable du fait qu'il peut être mis en œuvre en très faible quantité. Habituellement, on utilise de 0,1 à 1000 mg et préférentiellement de 1 à 100 mg d'équivalent d'hydroxyde de métal alcalin ou alcalino-terreux par kg de polysiloxane à polymériser et à réarranger. L'équivalent d'hydroxyde pour un dérivé alcalin ou alcalino-terreux quelconque est exprimé par le poids de la quantité d'hydroxyde du métal que l'on devrait ajouter et qui correspondrait au même nombre d'atomes grammes de métal alcalin ou alcalino-terreux que celui du dérivé alcalin ou alcalino-terreux utilisé.

Le rapport molaire tris(oxaalkyl)-amine/équivalent hydroxyde de métal alcalin ou alcalino-terreux est habituellement compris entre 0,01 à 100 et préférentiellement entre 0,1 et 50.

Le procédé selon l'invention peut être réalisé par simple chauffage à une température comprise entre 80° et 200°C et préférentiellement entre 80 et 180°C. La polymérisation et le réarrangement peuvent être effectueés en milieu solvant ou non. Si on opte pour l'usage d'un solvant, ce dernier sera choisi parmi tous les solvants utilisables pour les polymérisation de cyclosiloxanes: parmi ceux-ci on citera: le benzène, le toluène, le THF, le dioxanne ...

Préférentiellement le procédé selon l'invention est réalisé en milieu non solvant. On observe un gain de temps très important, pour un taux de transformation donné, vis à vis de la durée de polymérisation réalisée uniquement à l'aide de la même quantité de catalyseur alcalin.

La technique décrite ci-avant présente un intérêt considérable dans la polymérisation des siloxanes à l'échelle industrielle, en continu on en discontinu.

Elle permet en particulier de préparer des huiles organosiliciques ou des gommes organosiliciques du type, méthyle, méthylvinyle, méthylphényle ... qui entrent dans des compositions conduisant après réticulation à l'air ou à la chaleur en présence des charges et ingrédients usuels, à des élastomères organosiliciques présentant d'excellentes propriétés mécaniques.

Les exemples qui suivent illustrent l'invention:

## Exemples

On introduit dans un réacteur agité en acier inoxydable de 2 litres. 1000 g d'octaméthylcylotétrasiloxane ($D_4$), 1,35 g de tétradécaméthylhexasiloxane ($M_2D_4$) et une quantité variable de tris(oxaalkyl)amine. On porte le mélange à 160° et lorsque cette température est atteinte, on introduit le catalyseur alcalin (solution de silanolate de potassium à raison de 1% dans le $D_4$). On détermine ensuite en fonction du temps le rendement en polymère en comparaison avec un essai témoin exempt de tris(oxaalkyl)amine.

Le tableau qui suit précise les conditions opératoires et les rendements en polymère.

| Exemple | $M_2D_4$ en g | Catalyseur alcanilin exprime en mg KOH/kg siloxane | Tris(oxaalkyl)amine Nature | Quantité en mg/kg | Rendement en polymère % avec durées de polymérisation variables 5' | 10' | 15' | 30' | 45' |
|---|---|---|---|---|---|---|---|---|---|
| 1 | 1,35 | 9,4 | Aucun | 0 | 7 | 14 | 20 | 40 | 60 |
| 2 | 1,38 | 10 | $N[(CH_2-CH_2O)_2H]_3$ | 58,4 | 28 | 40 | 50 | >80 | |
| 3 | 1,32 | 10,3 | $N[(CH_2-CH_2O)_2H]_3$ | 1490 | | | >90 | | |
| 4 | 1,32 | 9,9 | $N[(CH_2-CH_2O)_3H]_3$ | 56,4 | | | | 66 | |
| 5 | 1,32 | 9,4 | $N[(CH_2-CH_2O)_3H]_3$ | 94,4 | 20 | 33 | 43 | 65 | 80 |
| 6 | | 9,1 | $N[(CH_2-CH_2O)_3C_2H_5]_3$ | 1090 | | | | 68 | |

**Revendications**

1. Procédé de préparation d'organopolysiloxanes de masse moléculaire élevée par polymérisation et réarrangement d'organopolysiloxanes de masse moléculaire plus faible en présence de catalyseur,

le procédé étant caractérisé en ce qu'il est effectué en présence d'un catalyseur alcalin et de tris(oxaalkyl)amine de formule (I):

$$N\!+\!CHR_1-CHR_2-O-(CHR_3-CHR_4-O)_n-R_5]_3$$

les divers symboles ayant la signification suivante:

— n un nombre entier inférieur ou égal à 10 et éventuellement nul.
— $R_1$, $R_2$, $R_3$, $R_4$: des radicaux identiques ou différents rerésentant un atome d'hydrogène ou un radical alkyle ayant de 1 à 4 atomes de carbone.
— $R_5$: un atome d'hydrogène, un radical alkyle ou cycloalkyle, ayant de 1 à 12 atomes de carbone, un radical phényle, alkylphényle $(C_mH_{2m+1}-O\!+$, phénylalkyle $(O-C_mH_{2m}\!+$ m étant un nombre entier au plus égal à 12.

2. Procédé selon la revendication 1 caractérisé en ce que les radicaux $R_1$, $R_2$, $R_3$ et $R_4$ de la tris(oxaalkyl)amine représentent un atome d'hydrogène ou un radical méthyle.

3. Procédé selon l'une des revendications 1 et 2 caractérisé en ce que dans la formule de la tris(oxaalkyl)amine, n est un nombre entier égal ou inférieur à 3 et éventuellement nul et $R_5$ représente un atome d'hydrogène ou un radical alkyle ayant de 1 à 4 atomes de carbone.

4. Procédé selon l'une des revendications précédentes dans lequel les composés organopolysiloxaniques de masses moléculaires plus faibles sont constituées par des cyclosiloxanes de formule II

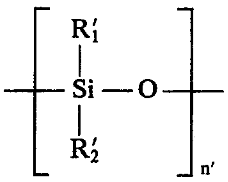

(II)

dans laquelle les divers symboles représentent:

— n': un nombre entier supérieur ou égal à 3.
— $R'_1$: un atome d'hydrogène, un radical alkyle, alkényle, halogénoalkyle, halogénoalkényle, ces divers radicaux ayant de 1 à 5 atomes de carbone et comportant le cas échéant de 1 à 6 atomes de chlore et/ou de fluor; un radical cycloalkyle, cycloalkényle, ces radicaux ayant de 3 à 8 atomes de carbone et étant éventuellement subsitués par 1 à 4 atomes de chlore et/ou de fluor; un radical cyanoalkyle ayant de 3 à 4 atomes de carbone; un radical phényle, alkylphényle ou phénylalkyle ayant de 6 à 8 atomes de carbone, ces radicaux étant éventuellement substitués par 1 à 4 atomes de chlore et/ou de fluor.
— $R'_2$: un radical tel que $R'_1$ ou encore un groupement alkoxy
— $OR'_3$, $R'_3$ ayant la même signification que $R'_1$.

5. Procédé selon l'une quelconque des revendications 1 à 3 dans lequel les composés organopolysiloxaniques de masses moléculaires plus faibles sont constitués par des cyclosiloxanes de formule (II):

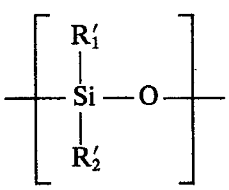

(II)

associés à des organopolysiloxanes de formule générale III:

$$(R'_1)_xSiO_{\frac{4-x}{2}} \qquad \text{(III)}$$

éventuellement associés à des motifs de formule:

$$(R'_1)_y(R'_2)_zSiO_{\frac{4-y-z}{2}} \qquad \text{(IV)}$$

les divers symboles ayant la signification suivante:

— $R'_1$ et $R'_2$ ont la même signification qu'à la revendication 4
— $OR'_3$, $R'_3$ ont la même signification que $R'_1$.
— x et y: nombres entiers égaux à 0, 1, 2 ou 3.

— z: nombre entier égal ou inférieur à 2.

6. Procédé selon la revendication 5 dans lequel les composés organopolysiloxaniques de masse moléculaire plus faible sont constitués par au moins 50% de l'hexaméthylcyclotrisiloxane ($D_3$) et/ou de l'octométhylcyclotétrasiloxane ($D_4$), le complément étant constitué par un organopolysiloxane linéaire »$M_2D_p$« et ayant pour formule V:

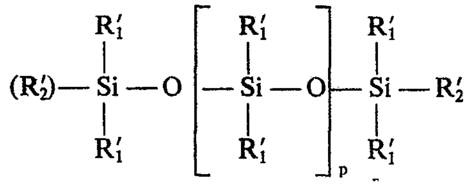 (V)

les divers symboles ayant la signification suivante:

— p: nombre entier allant de 1 à 100
— $R'_1$ et $R'_2$ ont la même signification qu'à la revendication 4.
— $OR'_3$, $R'_3$ ayant la même signification que $R'_1$.

7. Procédé selon l'une quelconque des revendications précédentes, caractérisé en ce qu'on utilise comme catalyseur 0,1 à 1000 mg d'hydroxyde de métal alcalin par kg d'organopolysiloxane.

8. Procédé selon la revendication 7, caractérisé en ce que le rapport molaire tris(oxaalkyl)amine/équivalent hydroxyde de métal alcalin est compris entre 0,01 et 100.

9. Procédé selon l'une quelconque des revendications précédentes dans lequel le procédé est réalisé sans addition de solvant.

## Patentansprüche

1. Verfahren zur Herstellung von Organopolysiloxanen erhöhter Molekularmasse durch Polymerisation und Umlagerung von Organopolysiloxanen mit geringerer Molekularmasse in Gegenwart eines Katalysators, dadurch gekennzeichnet, daß das Verfahren durchgeführt wird in Anwesenheit eines alkalischen Katalysators und von Tris-(oxaalkyl)-amin der Formel (I)

$$N\!\left[CHR_1-CHR_2-O-(CHR_3-CHR_4-O)_n-R_5\right]_3 \qquad (I)$$

wobei die verschiedenen Symbole die folgende Bedeutung haben:

— n ist eine ganze Zahl unterhalb oder gleich 10 und gegebenenfalls Null
— $R_1$, $R_2$, $R_3$, $R_4$ sind identische oder voneinander verschiedene Reste und bedeuten ein Wasserstoffatom oder einen Alkylrest mit 1 bis 4 Kohlenstoffatomen
— $R_5$ ist ein Wasserstoffatom, ein Alkyl- oder Cycloalkylrest mit 1 bis 12 Kohlenstoffatomen, ein Phenylrest, Alkylphenyl $(C_mH_{2m+1}-O\!-)$, Phenylalkyl $(O-C_mH_{2m}\!-)$, wobei m eine ganze Zahl höchstens 12 ist.

2. Verfahren gemäß Anspruch 1, dadurch gekennzeichnet, daß die Reste $R_1$, $R_2$, $R_3$ und $R_4$ des Tris-(oxaalkyl)-amins ein Wasserstoffatom oder einen Methylrest bedeuten.

3. Verfahren gemäß einem der Ansprüche 1 und 2, dadurch gekennzeichnet, daß in der Formel des Tris-(oxaalkyl)-amins n eine ganze Zahl gleich oder unterhalb von 3, gegebenenfalls Null ist und $R_5$ ein Wasserstoffatom oder einen Alkylrest mit 1 bis 4 Kohlenstoffatomen bedeutet.

4. Verfahren gemäß einem der vorhergehenden Ansprüche, worin die Organopolysiloxanverbindungen der geringeren Molekularmassen aus Cyclosiloxanen der Formel (II)

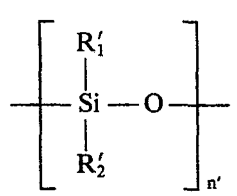 (II)

bestehen, worin die verschiedenen Symbole bedeuten:

— n' ist eine ganze Zahl größer oder gleich 3
— $R'_1$ ist ein Wasserstoffatom, ein Alkyl-, Alkenyl-, Halogenalkyl-, Halogenalkenylrest, wobei diese

verschiedenen Reste 1 bis 5 Kohlenstoffatome enthalten und gegebenenfalls 1 bis 6 Chlor- und/oder Fluoratome tragen; ein Cycloalkyl- oder Cycloalkenylrest, wobei diese Reste 3 bis 8 Kohlenstoffatome enthalten und gegebenenfalls substituiert sind durch 1 bis 4 Chlor- und/oder Fluoratome; ein Cyanoalkylrest mit 3 bis 4 Kohlenstoffatomen; ein Phenyl-, Alkylphenyl- oder Phenylalkylrest mit 6 bis 8 Kohlenstoffatomen, wobei diese Reste gegebenenfalls substituiert sind durch 1 bis 4 Chlor- und/oder Fluoratome

— $R'_2$ ist ein Rest wie $R'_1$ oder auch eine Alkoxygruppe $OR'_3$, wobei $R'_3$ dieselbe Bedeutung wie $R'_1$ hat.

5. Verfahren gemäß einem der Ansprüche 1 bis 3, worin die Organopolysiloxanverbindungen mit geringerer Molekularmasse bestehen aus Cyclosiloxanen der Formel (II)

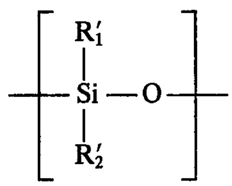

(II)

assoziiert mit Organopolysiloxanen der allgemeinen Formel (III)

$$(R'_1)_x SiO_{\frac{4-x}{2}} \qquad \text{(III)}$$

gegebenenfalls assoziiert mit Gruppierungen der Formel (IV)

$$(R'_1)_y (R'_2)_z SiO_{\frac{4-y-z}{2}} \qquad \text{(IV)}$$

worin die verschiedenen Symbole die folgende Bedeutung haben:

— $R'_1$ und $R'_2$ haben dieselbe Bedeutung wie in Anspruch 4
— $OR'_3$, $R'_2$ haben dieselbe Bedeutung wie $R'_1$
— x und y sind ganze Zahlen gleich 0, 1, 2 oder 3
— z ist eine ganze Zahl gleich oder unterhalb 2.

6. Verfahren gemäß Anspruch 5, worin die Organopolysiloxanverbindungen mit geringerer Molekularmasse bestehen aus wenigstens 50% Hexamethylcyclotrisiloxan ($D_3$) und/oder Octomethylcyclotetrasiloxan ($D_4$), wobei der Rest aus einem linearen Organopolysiloxan »$M_2D_p$« besteht und der Formel (V)

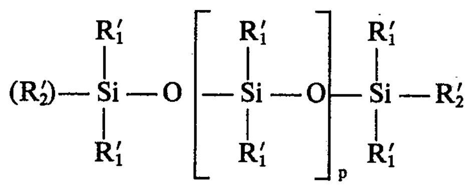

(V)

entspricht, wobei die verschiedenen Symbole die folgende Bedeutung besitzen:

— p ist eine ganze Zahl von 1 bis 100,
— $R'_1$ und $R'_2$ haben dieselbe Bedeutung wie in Anspruch 4,
— $OR'_3$, $R'_3$ haben dieselbe Bedeutung wie $R'_1$.

7. Verfahren gemäß einem der vorhergehenden Ansprüche, dadurch gekennzeichnet, daß man als Katalysator 0,1 bis 1000 mg eines Alkalimetallhydroxids pro kg Organopolysiloxan verwendet.

8. Verfahren gemäß Anspruch 7, dadurch gekennzeichnet, daß das molare Verhältnis Tris-(oxaalkyl)-amin/Äquivalent Alkalimetallhydroxid zwischen 0,01 und 100 liegt.

9. Verfahren gemäß einem der vorhergehenden Ansprüche, dadurch gekennzeichnet, daß das Verfahren ohne Zusatz von Lösungsmittel durchgeführt wird.

## Claims

1. Process for the preparation of organopolysiloxanes of high molecular mass by polymerisation and rearrangement of organopolysiloxanes of lower molecular mass in the presence of a catalyst, the process being characterised in that it is carried out in the presence of an alkaline catalyst and of a

tris(oxaalkyl)amine of the formula (I):

$$N\!\left[CHR_1-CHR_2-O-(CHR_3-CHR_4-O)_n-R_5\right]_3$$

where the various symbols have the following meaning:

- n is an integer less that or equal to 10, which can optionally be zero;
- $R_1$, $R_2$, $R_3$ and $R_4$ are identical or different radicals representing a hydrogen atom or an alkyl radical having from 1 or 4 carbon atoms;
- $R_5$ ist a hydrogen atom, an alkyl or cycloalkyl radical having from 1 to 12 carbon atoms, a phenyl or alkylphenyl radical or a radical $(C_mH_{2m+1}-O)$ or phenylalkyl $(O-C_mH_{2m})$, m being an integer at most equal to 12.

2. Process according to Claim 1, characterised in that the radicals $R_1$, $R_2$, $R_3$ and $R_4$ of the tris(oxaalkyl)amine represent a hydrogen atom or a methyl radical.

3. Process according to one of Claims 1 and 2, characterised in that in the formula of the tris(oxaalkyl)amine, n is an integer equal to or less than 3 and optionally zero, and $R_5$ represents a hydrogen atom or an alkyl radical having from 1 to 4 carbon atoms.

4. Process according to one of the preceding claims, in which the organopolysiloxane compounds of lower molecular mass consist of cyclosiloxanes of the formula II

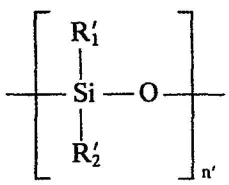

(II)

in which the various symbols represent the following:

- n' is an integer greater than or equal to 3,
- $R'_1$ is a hydrogen atom, an alkyl, alkenyl, haloalkyl or haloalkenyl radical, these various radicals having from 1 to 5 carbon atoms and containing, where appropriate, from 1 to 6 atoms of chlorine and/or fluorine, a cycloalkyl or cycloalkenyl radical, these radicals having from 3 to 8 carbon atoms and being optionally substituted by 1 to 4 chlorine and/or fluorine atoms, a cyanoalkyl radical having from 3 to 4 carbon atoms, or a phenyl, alkylphenyl or phenylalkyl radical having from 6 to 8 carbon atoms, these radicals being optionally substituted by 1 to 4 atoms of chlorine and/or fluorine, and
- $R'_2$ ist a radical such as $R'_1$ or is an alkoxy group $-OR'_3$, $R'_3$ having the same meaning as $R'_1$.

5. Process according to any one of Claims 1 to 3, in which the organopolysiloxane compounds of lower molecular mass consist of cyclosiloxanes of the formula (II)

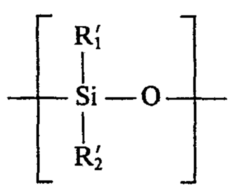

(II)

together with organopolysiloxanes of the formula III

$$(R'_1)_xSiO_{\frac{4-x}{2}} \quad (III)$$

optionally together with units of the formula

$$(R'_1)_y(R'_2)_zSiO_{\frac{4-y-z}{2}} \quad (IV)$$

the various symbols having the following meaning:

- $R'_1$ and $R'_2$ have the same meaning as in Claim 4,
- $OR'_3$, $R'_3$ have the same meaning as $R'_1$,
- x and y are integers equal to 0, 1, 2 or 3 and
- z is an integer equal to or less than 2.

6. Process according to Claim 5, in which the organopolysiloxane compounds of lower molecular mass consist of at least 50% of hexamethylcyclotrisiloxane ($D_3$) and/or of octamethylcyclotetrasiloxane ($D_4$), the remainder consisting of a linear organopolysiloxane »$M_2D_p$« having the formula V:

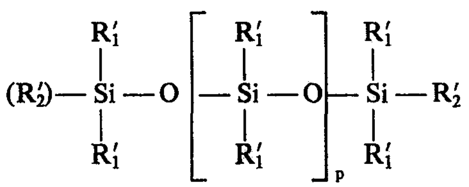

(V)

where the various symbols have the following meaning:

- p is an integer from 1 to 100,
- $R'_1$ and $R'_2$ have the same meaning as in Claim 4 and
- $OR'_3$,$R'_3$ have the same meaning as $R'_1$.

7. Process according to any one of the preceding claims, characterised in that 0.1 to 1,000 mg of an alkali metal hydroxide, per kg of organopolysiloxane, is used as the catalyst.

8. Process according to Claim 7, characterised in that the molar ratio of tris(oxaalkyl)amine/equivalent of alkali metal hydroxide is between 0.01 and 100.

9. Process according to any one of the preceding claims, in which the process is carried out without addition of solvent.